# EUROPEAN PATENT APPLICATION

(11) **EP 3 258 613 A1**
(43) Date of publication of application: **20.12.2017**
(21) Application number: 16874092.6
(22) Date of filing: 30.11.2016
(51) Int. Cl.: H04B 7/04, H04W 88/08

(54) **METHOD AND SYSTEM FOR IMPLEMENTING MULTI-USER MULTIPLE-INPUT MULTIPLE-OUTPUT**

(30) Priority: 12.04.2016 CN 201610224205
(71) Applicant: Phicomm (Shanghai) Co., Ltd., Shanghai 201616 (CN)
(72) Inventor: WANG, Bin, Shanghai 201616 (CN)
(74) Representative: Sun, Yiming
(86) International application number: PCT/CN2016/108168
(87) International publication number: WO 2017/177689

(57) **Abstract**

Embodiments of the present disclosure provide a method and system for implementing multi-user multiple-input multiple-output (MU-MIMO). The method includes: connecting two MU-MIMO-supported access points to form a virtual access point stack; setting a primary access point and a secondary access point in the virtual access point stack; performing access point configuration on the primary access point, and synchronizing the configuration of the primary access point to the secondary access point; and scheduling all antennas of the virtual access point stack by the primary access point. According to the embodiments of the present disclosure, wireless capacity is improved without consuming extra wireless spectrum resources.

## Description

### TECHNICAL FIELD

Embodiments of the present disclosure relate to the field of communications technologies, and in particular, to a method and system for implementing multi-user multiple-input multiple-output (MU-MIMO).

### BACKGROUND

Multi-user multiple-input multiple-output (MU-MIMO) is a technology enabling a router to simultaneously communicate with a plurality of devices, and is a milestone of the second stage of the 802.11ac standard. Such advancement is even greater than the evolution from 802.11b/g to 802.11n and then to 802.11ac. Evolution of the version only improves the theoretic rate, whereas MU-MIMO practically improves utilization rate of the network resources.

MU-MIMO is mainly intended to improve efficiency of WiFi networks. Assume that traditional 802.11ac router signals are imagined to a "circle", the circle is the coverage of the signals, and the antenna is at the center of the circle and emits signals outside at all 360 degrees. The router may sequentially communicate with devices in the "circle" in a one-to-one manner each time.

MU-MIMO includes uplink MU-MIMO and downlink MU-MIMO. In the uplink MU-MIMO, different users transmit data streams uplink using the same time-frequency resources. From the perspective of the receiving end, these data streams may be regarded as coming from different antennas of the same user terminal, such that a virtual MIMO system is formed. In the downlink MU-MIMO, a plurality of data streams are transmitted to different user terminals, and a plurality of user terminals and an eNB form a downlink MU-MIMO system. The downlink MU-MIMO may separate the data streams to be transmitted to different users using the cancellation/nulling method at the receiving end, and may also separate data streams of different users in advance using the beamforming method at the transmitting end, to simplify operations at the receiving end.

MU-MIMO may greatly increase the number of accessed users, and support a maximum of eight antennas. However, typically in practical AP development, four antennas are at most supported generally in the 5G frequency band. This is because most users need no more than four antennas, and only a few users need more than four antennas. Therefore, access points (APs) with more than four antennas are not prevailing in the market. As a result, it is difficult for users who require an access point supporting more than four antennas to find a suitable product.

### SUMMARY

The present disclosure provides a method and system for implementing multi-user multiple-input multiple-output, which improves the throughput of wireless network without consuming extra wires spectrum resources.

The present disclosure provides a method for implementing multi-user multiple-input multiple-output (MU-MIMO). The method includes: connecting two MU-MIMO-supported access points to form a virtual access point stack; setting a primary access point and a secondary access point in the virtual access point stack; and performing access point configuration on the primary access point, and synchronizing the configuration of the primary access point to the secondary access point; and scheduling all antennas of the virtual access point stack by the primary access point.

Further, the connecting two MU-MIMO-supported access points to form a virtual access point stack includes: connecting two MU-MIMO-supported access points having four antennas using a cable, each access point supporting two GE interfaces; wherein Layer-2 communication is used between the two MU-MIMO-supported access points.

Further, the setting a primary access point and a secondary access point in the virtual access point stack includes: setting one access point as the primary access point and the other access point as the secondary access point when the two access points are connected; wherein one GE interface of the primary access point is externally connected to a switch and serves as an uplink port of the virtual access point stack, and the other GE interface of the primary access point is connected to one GE interface of the secondary access point.

Further, the scheduling all antennas of the stack virtual access point by the primary access point includes: if wireless communication is performed using the antennas of the primary access point, scheduling the antennas on the primary access point by the primary access point; and if wireless communication is performed using the antennas of the secondary access point, reporting information of the wireless communication to the primary access point, and performing the wireless communication using the primary access point.

Further, the method further includes: using the secondary access point as a new primary access point of the virtual access point stack if the primary access point encounters a fault.

The present disclosure further provides a system for implementing MU-MIMO. The system includes: two MU-MIMO-supported access points, connected to form a virtual access point stack, and setting a primary access point and a secondary access point in the virtual access point stack; wherein the primary access point is configured to configure the primary access point, synchronize configuration of the primary access point to the secondary access point, and schedule all antennas of the virtual access point stack; and the secondary access point is configured to configure the secondary access point according to the configuration of the primary access point, and schedule all antennas of the secondary access point using the primary access point.

Further, the connecting two access points supporting MU-MIMO to form a virtual access point stack includes: connecting two MU-MIMO-supported access points having four antennas using a cable, each access point supporting two GE interfaces; wherein Layer 2 communication is used between the two MU-MIMO-supported access points.

Further, the setting a primary access point and a secondary access point in the virtual access point stack includes: when two access points are connected, setting one access point as the primary access point and the other access point as the secondary access point; wherein one GE interface of the primary access point is externally connected to a switch and serves as an uplink port of the virtual access point stack, and the other GE interface of the primary access point is connected to one GE interface of the secondary access point.

Further, the scheduling all antennas of the virtual access point stack by the primary access point includes: if wireless communication is performed using the antennas of the primary access point, scheduling the antennas on the primary access point by the primary access point; and if wireless communication is performed using the antennas of the secondary access point, reporting information of the wireless communication to the primary access point, and performing the wireless communication using the primary access point.

Further, the secondary access point is further configured to assign the secondary access point as a new access point of the virtual access point stack if the primary access point encounters a fault.

In the method and system for implementing multi-user multiple-input multiple-output according to the present disclosure, two access points are stacked to form a virtual access point stack, and thus the merit that MU-MIMO supports a maximum of eight antennas may be brought into full play, such that the two access points work in the same wireless channel, which improves the capacity of wireless network between two access point without extra spectrum resource consumption.

### BRIEF DESCRIPTION OF THE DRAWINGS

To describe embodiments of the present disclosure or the technical solution in the related art more clearly, hereinafter, drawings that are to be referred for description of the embodiments or the related art are briefly described. Apparently, the drawings described hereinafter merely illustrate some embodiments of the present disclosure. Persons of ordinary skill in the art may also derive other drawings based on the drawings described herein without any creative effort.
FIG. 1 is a schematic flowchart of a method for implementing multi-user multiple-input multiple-output according to an embodiment of the present disclosure; and
FIG. 2 is a schematic architecture diagram of a system for implementing multi-user multiple-input multiple-output according to an embodiment of the present disclosure.

### DETAILED DESCRIPTION

To make the objectives, technical solutions and advantages of the embodiments of the present disclosure clearer, the technical solutions according to the embodiments of the present disclosure are clearly and thoroughly described with reference to the accompanying drawings of the embodiments of the present disclosure. The described embodiments are merely exemplary ones, but are not all the embodiments of the present disclosure. Based on the embodiments of the present disclosure, all other embodiments derived by persons of ordinary skill in the art without any creative efforts shall fall within the protection scope of the present disclosure.

At present, most users need no more than four antennas. Therefore, it is difficult for users who require an access point supporting more than four antennas to find a suitable product.

The present disclosure provides a solution of implementing MU-MIMO by stacking two APs, such that the users may connect two MU-MIMO-supported APs each having four antennas to form a MU-MIMO-supported AP with eight antennas.

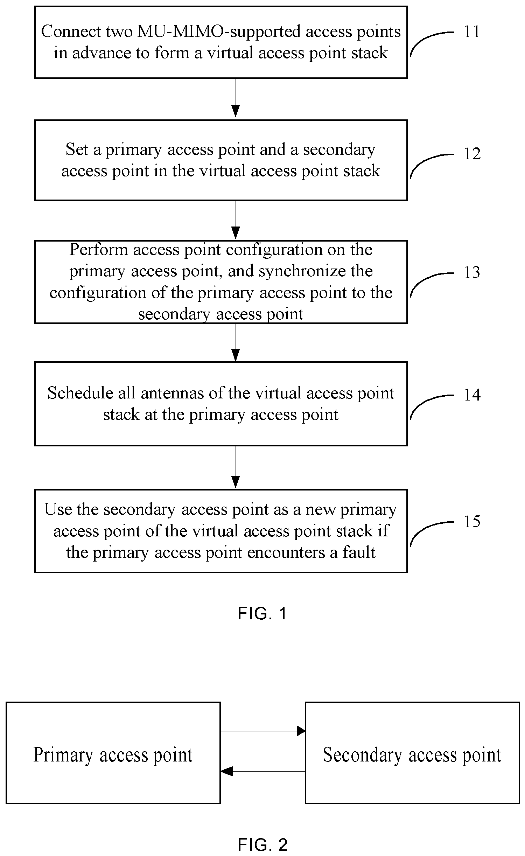

FIG. 1 is a schematic flowchart of a method for implementing multi-user multiple-input multiple-output according to an embodiment of the present disclosure. As illustrated in FIG. 1, the method includes the following steps:
Step S11: Two MU-MIMO-supported access points are connected in advance to form a virtual access point stack.

In this step, two MU-MIMO-supported access points having four antennas are directly connected using a cable, and Layer-2 communication is used between the two MU-MIMO-supported access points. The private protocol used in the Layer-2 communication is implemented in the embodiments of the present disclosure without any limitation.

Step S12: A primary access point and a secondary access point are set in the virtual access point stack.

In this step, one access point is set as a primary access point and the other access point is set as a secondary access point when the two access points are connected.

Since the data volume is great, a 100M interface may not accommodate the needs. However, the access point according to the embodiments of the present disclosure may support two GE interfaces, for example, eth0 and eth1. GE is an abbreviation of Gigabit Ethernet, that is, Ethernet with a transmission rate of 1000M. The GE interface refers to a Gigabit Ethernet interface with a GE tag which indicates that the interface is a 1000M Ethernet interface.

In a specific embodiment of the present disclosure, the eth0 interface of the primary access point is externally connected to a switch and serves as an uplink port of the entire virtual access point stack, and the eth1 interface of the primary access point is connected to the eth0 interface of the secondary access point whereas the eth1 interface of the secondary access point is not used.

Step S13: Access point configuration is performed on the primary access point, and the configuration of the primary access point is synchronized to the secondary access point.

In this step, the configuration is maintained on the primary access point, the primary access point synchronizes the configuration of the primary access point to the secondary access point using a private protocol, such that all configurations on the secondary access point are consistent with those on the primary access point.

Step S14: The primary access point schedules all antennas of the virtual access point stack.

In this step, scheduling of all antennas is uniformly determined by the primary access point. The secondary access point transmits information of communication information to the primary access point. Specifically, when the antennas of the secondary access point are used in the wireless communication, the secondary access point reports the information of the wireless communication to the primary access point, and the primary access point forwards the information of the information of the wireless communication to the externally-connected switch for processing.

Step S15: The secondary access point is used as a new primary access point of the virtual access point stack if the primary access point encounters a fault.

In this step, if the primary access point encounters a fault, the secondary access point is used as a new primary access point, and the original primary access point is used as a secondary access point.

In the embodiments of the present disclosure, since MU-MIMO specifies that each antenna works independently and is connected to a different station (STA), such connection is subject to no technical problem. That is, the virtual access point stack is equivalent to an access point having at least eight antennas.

In addition, since at present there are at least two access points, the four antennas of the primary access point has a large spatial distance from the four antennas of the secondary access point. Therefore, the stacking manner also improves the performance of wireless MIMO.

It should be noted that stacking of two access points is implemented in MU-MIMO, and MU-MIMO may allow antennas of the primary access point to be connected to one user and allow antennas of the secondary access point to be connected to another user. Therefore, MU-MIMO may be simply implemented by stacking access points. However, in case of single-user MIMO (SU-MIMO), since all antennas need to be connected to one user, such MIMO is hard to be implemented according to the conventional art. However, in the future, such problem may be broken through, which is not limited herein.

FIG. 2 is a schematic architecture diagram of a system for implementing multi-user multiple-input multiple-output according to an embodiment of the present disclosure. As illustrated in FIG. 2, the system for implementing multi-user multiple-input multiple-output (MU-MIMO) includes: two MU-MIMU-supported access points, wherein the two MU-MIMO-supported access points are connected to form a virtual access point stack, and a primary access point and a secondary access point are set in the virtual access point stack;
wherein the primary access point is configured to configure the primary access point, synchronize configuration of the primary access point to the secondary access point, and schedule all antennas of the virtual access point stack; and
the secondary access point is configured to configure the secondary access point according to the configuration of the primary access point, and schedule all antennas of the secondary access point by the primary access point.

Specifically,
the connecting two MU-MIMO-supported access points to form a virtual access point stack includes: connecting two MU-MIMO-supported access points with four antennas by a cable, each access point supporting two GE interfaces; wherein Layer-2 communication is used between the two MU-MIMO-supported access points.;
the setting of a primary access point and a secondary access point in the virtual access point stack includes: setting one access point as a primary access point and the other access point as a secondary access point when the two access points are connected; wherein one GE interface of the primary access point is externally connected to a switch and serves as an uplink port of the virtual access point stack, and the other GE interface of the primary access point is connected to one GE interface of the secondary access point;
the scheduling all antennas of the virtual access point stack by the primary access point includes: if wireless communication is performed using the antennas of the primary access point, scheduling the antennas on the primary access point by the primary access point; and if wireless communication is performed using the antennas of the secondary access point, reporting information of the wireless communication to the primary access point, and performing the wireless communication using the primary access point; and
the secondary access point is further configured to serve as a new primary access point of the virtual access point stack, if the primary access point encounters a fault.

In the conventional solution, if two access points are directly used, it signifies that these two access points need to work in different independent wireless channels. In this case, more wireless spectrum resources are consumed. If the two access points work in the same channel, due to co-channel interference there between, the access points may not well work. As a result, more wireless resources are consumed, and the throughput is greatly lowered.

In the embodiments of the present disclosure, two access points are stacked to form a virtual access point stack, and thus the merit that MU-MIMO supports a maximum of eight antennas may be brought into full play, such that the two access points work in the same wireless channel, which improves the capacity of wireless network between two access point without extra spectrum resource consumption.

The above described apparatus embodiments are merely for illustration purpose only. The units which are described as separate components may be physically separated or may be not physically separated, and the components which are illustrated as units may be or may not be physical units, that is, the components may be located in the same position or may be distributed into a plurality of network units. A part or all of the modules may be selected according to the actual needs to achieve the objectives of the technical solutions of the embodiments. Persons of ordinary skill in the art may understand and implement the present application without paying any creative effort.

According to the above embodiments of the present application, a person skilled in the art may clearly understand that the embodiments of the present application may be implemented by means of hardware or by means of software plus a necessary general hardware platform. Based on such understanding, portions of the technical solutions of the present application that essentially contribute to the related art may be embodied in the form of a software product, the computer software product may be stored in a storage medium, such as a ROM/RAM, a magnetic disk, a CD-ROM and the like, including several instructions for causing a computer device (a personal computer, a server, or a network device) to perform the various embodiments of the present application, or certain portions of the method of the embodiments.

It should be finally noted that the above-described embodiments are merely for illustration of the present disclosure, but are not intended to limit the present disclosure. Although the present disclosure is described in detail with reference to these embodiments, a person skilled in the art may also make various modifications to the technical solutions disclosed in the embodiments, or make equivalent replacements to a part of the technical features contained therein. Such modifications or replacement, made without departing from the principles of the present disclosure, shall fall within the scope of the present disclosure.

## Claims

1. A method for implementing multi-user multiple-input multiple-output (MU-MIMO), comprising:
connecting two MU-MIMO-supported access points to form a virtual access point stack;
setting a primary access point and a secondary access point in the virtual access point stack;
performing access point configuration on the primary access point, and synchronizing the configuration of the primary access point with the secondary access point; and
scheduling all antennas of the virtual access point stack by the primary access point.

2. The method for implementing multi-user multiple-input multiple-output according to claim 1, wherein the connecting two MU-MIMO-supported access points to form a virtual access point stack comprises:
connecting two MU-MIMO-supported access points having four antennas using a cable, each access point supporting two GE interfaces;
wherein Layer-2 communication is used between two MU-MIMO-supported access points.

3. The method for implementing multi-user multiple-input multiple-output according to claim 2, wherein setting a primary access point and a secondary access point in the virtual access point stack comprises:
setting one access point as the primary access point and the other access point as the secondary access point when the two access points are connected;
wherein one GE interface of the primary access point is externally connected to a switch and serves as an uplink port of the virtual access point stack, and the other GE interface of the primary access point is connected to one GE interface of the secondary access point.

4. The method for implementing multi-user multiple-input multiple-output according to claim 3, wherein the scheduling all antennas of the virtual access point stack by the primary access point comprises:
if wireless communication is performed using the antennas of the primary access point, scheduling the antennas on the primary access point by the primary access point;
and if wireless communication with an externally-connected switch is performed using the antennas of the secondary access point, reporting information of the wireless communication to the primary access point by the secondary access point, and performing the wireless communication using the primary access point.

5. The method for implementing multi-user multiple-input multiple-output according to claim 1, further comprising:
using the secondary access point as a new primary access point of the virtual access point stack if the primary access point encounters a fault.

6. A system for implementing multi-user multiple-input multiple-output (MU-MIMO), comprising: two MU-MIMO-supported access points, wherein the two MU-MIMO-supported access points are connected to form a virtual access point stack, and a primary access point and a secondary access point are set in the virtual access point stack; wherein
the primary access point is configured to configure the primary access point, synchronize configuration of the primary access point to the secondary access point, and schedule all antennas of the virtual access point stack; and
the secondary access point is configured to configure the secondary access point according to the configuration of the primary access point, and schedule all antennas of the secondary access point using the primary access point.

7. The system for implementing multi-user multiple-input multiple-output according to claim 6, wherein the process that the two MU-MIMO-supported access points are connected to form a virtual access point stack comprises:
connecting two MU-MIMO-supported access points with four antennas using a cable, each access point supporting two GE interfaces;
wherein Layer-2 communication is used between the two MU-MIMO-supported access points.

8. The system for implementing multi-user multiple-input multiple-output according to claim 7, wherein the process that a primary access point and a secondary access point are set in the virtual access point stack comprises:
when the two access points are connected, setting one access point as the primary access point and the other access point as the secondary access point;
wherein one GE interface of the primary access point is externally connected to a switch and serves as an uplink port of the virtual access point stack, and the other GE interface of the primary access point is connected to one GE interface of the secondary access point.

9. The system for implementing multi-user multiple-input multiple-output according to claim 8, wherein the scheduling all antennas of the virtual access point stack by the primary access point comprises:
if wireless communication is performed using the antennas of the primary access point, scheduling the antennas on the primary access point by the primary access point; and
if wireless communication with an externally-connected switch is performed using the antennas of the secondary access point, reporting information of the wireless communication to the primary access point by the secondary access point, and performing the wireless communication using the primary access point.

10. The system for implementing multi-user multiple-input multiple-output according to claim 9, wherein the secondary access point is further configured to use the secondary access point as a new primary access point of the virtual access point stack if the primary access point encounters a fault.
